(19) Europäisches Patentamt / European Patent Office / Office européen des brevets

(11) **EP 2 502 468 B1**

(12) **FASCICULE DE BREVET EUROPEEN**

(45) Date de publication et mention de la délivrance du brevet:
**08.01.2014 Bulletin 2014/02**

(21) Numéro de dépôt: **10787515.5**

(22) Date de dépôt: **12.11.2010**

(51) Int Cl.:
*H05H 1/34* *(2006.01)*    *B23K 10/00* *(2006.01)*

(86) Numéro de dépôt international:
**PCT/FR2010/000753**

(87) Numéro de publication internationale:
**WO 2011/061417 (26.05.2011 Gazette 2011/21)**

(54) **TORCHE A PLASMA ET PROCEDE DE STABILISATION D'UNE TORCHE A PLASMA.**

PLASMABRENNER UND VERFAHREN ZUR STABILISIERUNG EINES PLASMABRENNERS

PLASMA TORCH AND METHOD FOR STABILIZING A PLASMA TORCH

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.11.2009 FR 0905512**

(43) Date de publication de la demande:
**26.09.2012 Bulletin 2012/39**

(73) Titulaire: **Centre National de la Recherche Scientifique**
**75016 Paris (FR)**

(72) Inventeurs:
• **RAT, Vincent**
  **F-87220 Feytiat (FR)**
• **COUDERT, Jean-François**
  **F-87000 Limoges (FR)**

(74) Mandataire: **Priori, Enrico et al**
**Cabinet Orès**
**36, rue de St. Pétersbourg**
**75008 Paris (FR)**

(56) Documents cités:
• RAT V ET AL: "Acoustic signature analysis of the interaction between a dc plasma jet and a suspension liquid jet", JOURNAL OF PHYSICS D: APPLIED PHYSICS IOP PUBLISHING LTD. UK, vol. 42, no. 19, 7 octobre 2009 (2009-10-07), pages 1-12, XP002590902, ISSN: 0022-3727, DOI: DOI: 10.1088/0022-3727/42/19/195202
• COUDERT J F ET AL: "Influence of Helmholtz oscillations on arc voltage fluctuations in a dc plasma spraying torch", JOURNAL OF PHYSICS D: APPLIED PHYSICS IOP PUBLISHING LTD. UK, vol. 40, no. 23, 7 décembre 2007 (2007-12-07), pages 7357-7366, XP002590903, ISSN: 0022-3727, DOI: 10.1088/0022-3727/40/23/016
• COUDERT J F ET AL: "Influence of configuration and operating conditions on the electric arc instabilities of a plasma spray torch: role of acoustic resonance", JOURNAL OF PHYSICS D: APPLIED PHYSICS IOP PUBLISHING LTD. UK, vol. 41, no. 20, 21 octobre 2008 (2008-10-21), XP002590904, ISSN: 0022-3727, DOI: 10.1088/0022-3727/41/20/205208

EP 2 502 468 B1

**Description**

L'invention porte sur une torche à plasma de type à arc soufflé, en particulier destinée à être utilisée pour la mise en oeuvre d'un procédé de revêtement de surface par projection plasma. L'invention porte également sur un procédé de stabilisation d'une telle torche à plasma.

La projection plasma est une technique qui permet de réaliser des revêtements de surface par injection, dans un jet de plasma, de matériaux qui peuvent avoir une forme pulvérulente, liquide, ou celle d'une suspension contenant un liquide et une poudre. Ces matériaux sont traités par le plasma, puis projetés sur une surface où elles forment un dépôt dont les propriétés dépendent tant des conditions opératoires que de la stabilité de la torche à plasma générant le jet.

Les torches généralement utilisées pour la mise en oeuvre d'un tel procédé sont du type « à arc soufflé ». Elles comportent une cathode chaude, fonctionnant par émission thermo-ionique de type tige et de forme conique à son extrémité ou de type bouton, montée coaxiale à une anode creuse cylindrique formant tuyère d'éjection des gaz, sans contact électrique, grâce à un support isolant de forme tubulaire constituant le corps de torche. Des cathodes froides, par exemple de type « puits » (torches « Aérospatiale ») peuvent également être utilisées ; ces torches sont généralement utilisées pour l'incinération des déchets, et pas pour la réalisation de revêtements de surface, mais le problème de l'instabilité de l'arc se pose également dans ce cas.

Dans tous les cas, le gaz plasmagène s'écoule dans une région connue comme « cavité cathodique » avant d'être converti en plasma. Comme son nom l'indique, la cavité cathodique est une région essentiellement close (mais présentant une entrée et une sortie de gaz) et délimitée au moins en partie par la cathode. Par exemple, dans une torche à cathode chaude de type tige, la cavité cathodique est constituée par l'espace allant de la bague d'injection du gaz plasmagène jusqu'à la pointe de la cathode. Dans une torche de type « Aérospatiale », la cavité cathodique est constituée par l'intérieur de la cathode creuse (à noter que dans ce cas la cavité cathodique englobe une partie de l'arc ; mais seule une petite fraction du gaz contenu dans cette cavité est ionisée à l'intérieur de la cavité).

Après amorçage d'un arc électrique continu entre la cathode et l'anode, une source de courant assure le passage d'un courant électrique dans le gaz plasmagène ionisé. Il s'établit alors un arc électrique confiné entre la cathode et l'anode. La puissance électrique dissipée dans le gaz plasmagène permet de générer un jet de plasma dans lequel sont injectés les matériaux à traiter. Cette puissance électrique dépend de la tension entre la cathode et l'anode.

Pour une présentation générale des torches à plasma, notamment du type à arc soufflé, voir l'article de Pierre Fauchais « Plasmas thermiques : production », Techniques de l'Ingénieur, fascicule D 2 820v2.

Il est connu que les torches à plasma d'arc soufflé sont le siège de fortes instabilités de l'arc électrique, qu'il convient de limiter afin d'obtenir un traitement homogène et stable des matériaux injectés dans le jet de plasma. En effet, l'arc électrique est instable ; sa position d'accrochage sur la paroi anodique (et cathodique, dans le cas des torches « Aérospatiale » à cathode creuse) varie au cours du temps, faisant donc varier sa longueur. Il en résulte que la tension de la torche (anode-cathode) varie également, et par conséquent la puissance électrique instantanée dissipée dans le gaz plasmagène, ce qui conduit à un traitement non uniforme des matériaux injectés dans celui-ci. Des études expérimentales ont montré que les vitesses et les températures de particules solides injectées dans le jet de plasma suivent les fluctuations de tension de torche et varient notablement. Il a également été mis en évidence que les suspensions subissent un traitement fortement instable à cause du jet de plasma fluctuant, ce qui influence directement les propriétés des revêtements. Cet effet est particulièrement gênant dans le cas des procédés de revêtement mettant en oeuvre des particules solides de dimensions sub-micrométriques.

Pour limiter l'amplitude du déplacement longitudinal de l'arc électrique sur la paroi anodique, et donc de la tension de la torche, des anneaux isolés électriquement (« neutrodes ») peuvent être insérés dans l'anode forçant l'arc à s'accrocher sur la paroi anodique plus en aval. Ces modifications peuvent s'appliquer à des torches monocathodes ou tri-cathodes. Voir à ce propos :

- l'article de M. Vilotijevic et al. « Velocity and texture of a plasma jet created in a plasma torch with fixed minimal arc length », Plasma Sources Sci. Technol. 18 (2009) 015016 ; et
- le document US 5,406,046.

Dans le cas des torches mono-cathodes avec neutrodes, l'amplitude de variation de tension est réduite, mais la tension moyenne est augmentée, ce qui engendre un accroissement important des puissances électriques consommées. Par ailleurs, puisque la région d'attachement de l'arc électrique est réduite, le courant d'arc ne doit pas être trop important afin de limiter le taux d'usure des anodes.

On peut également utiliser un champ magnétique appliqué au pied d'arc pour répartir plus efficacement son impact thermique sur la paroi anodique comme par exemple dans le cas des torches à cathode puits à injection vortex (EP0277845). La complexité du système s'en trouve corrélativement accrue, de même que celle de sa maintenance.

Dans le cas des torches tri-cathodes (US 5,406,046), la présence de neutrodes permet aussi de limiter l'amplitude de variation de la tension d'arc. Mais les trois cathodes génèrent trois arcs électriques, chacun ayant un courant plus faible que pour les torches mono-cathodes, qui créent trois jets de plasma. L'érosion des électrodes est alors significativement réduite. L'inconvénient est que l'injection des gaz plasmagènes, qui se réalise avec une composante de vitesse azimutale non nulle (injection « swirl »), induit une variation dans la position des jets de plasma. Leur distribution spatiale dépend des conditions opératoires, parfois instables, et il faut donc systématiquement adapter l'injection de matériaux dans les jets de plasma. Pour pallier ces inconvénients, des anodes complexes ont été développées afin d'empêcher la variabilité des lieux d'accrochage des trois arcs sur la paroi anodique : voir à ce propos le document US 7,030,336.

La géométrie interne de la torche peut aussi être modifiée en ajoutant une anode « chaude » qui permettra de limiter l'amplitude de fluctuations du pied d'arc et un gainage du jet de plasma par un gaz inerte permettant de limiter le mélange prématuré du plasma avec le gaz ambiant : voir à ce propos le document US 5,220,150.

Toutes ces solutions conduisent à une augmentation notable de la complexité des torches plasma.

L'invention vise à procurer une solution au problème d'instabilité des torches plasma à arc soufflé, ne présentant pas les inconvénients précités des techniques connues de l'art antérieur.

Alors que la plupart des recherches sur l'origine des instabilités des torches à plasma d'arc soufflé se sont focalisées sur une description magnétohydrodynamique du comportement de l'arc électrique (S. A. Wutzke et al. « Study of electric-arc behavior with superimposed flow » AIAA J., 5, 707 (1967) ; J. P. Trelles et al. « Non-equilibrium modeling of arc plasma torches » J. Phys. D : Appl. Phys. 40 (2007) 5937 - 5952), la présente invention exploite un effet mécanique, et plus précisément acoustique.

Des études récentes ont montré l'existence d'un couplage entre les mouvements de l'arc électrique et les oscillations de pression du gaz plasmagène froid dans la cavité cathodique (partie amont de la torche) :

-    J. F. Coudert, V. Rat, D. Rigot « Influence of Helmholtz oscillations on arc fluctuations in a de plasma spraying torch », J. Phys. D : Appl. Phys. 40 (2007) 7357-7366 ; et
-    J. F. Coudert, V. Rat « Influence of configuration and operating conditions on the electric arc instabilities of a plasma spray torch: role of acoustic resonance », J. Phys. D: Appl. Phys. 41 (2008) 205208.

V. Rat, d.F. Coudert « Acoustic signature analysis of the interaction between a de plasma jet and a suspension liquid jet », J. Phys. D: App. Phys. 42 (2009) 195202 divulgue un dispositif acoustique de diagnostic pour investigation d'un jet de plasma.

Ces publications, cependant, n'établissent pas un lien de causalité entre oscillations de pression et instabilités électriques à l'intérieur de la torche, et ne proposent pas de technique de stabilisation des torches plasma exploitant ce couplage.

Les présents inventeurs ont démontré que l'atténuation ou la suppression de certaines ondes de pression résonantes dans ladite cavité cathodique (oscillations de Helmholtz) permet une réduction très marquée de l'instabilité de l'arc électrique. Ainsi, un objet de l'invention est une torche à plasma du type à arc soufflé comportant :

-    un corps de torche de forme tubulaire ;
-    au moins une cathode disposée à l'intérieur dudit corps de torche et délimitant au moins une cavité dite cathodique ; et
-    au moins une anode tubulaire, également disposée à l'intérieur du corps de torche, formant tuyère d'éjection du plasma ;

la dite torche comporte également un moyen d'atténuation d'ondes de pression résonantes d'un gaz plasmagène froid dans ladite ou chaque cavité cathodique, caractérisée en ce que le dit moyen comprend au moins un résonateur acoustique débouchant dans la cavité cathodique.

L'atténuation des ondes de pression peut se faire de manière active, en utilisant un détecteur desdites ondes et un actionneur engendrant des oscillations en opposition de phase ; la détection des ondes peut se faire de manière directe, au moyen d'un capteur de pression, ou de manière indirecte, par mesure de la tension d'arc ou de la luminosité de l'arc. Il est également possible d'avoir recours à la technique de conjugaison de phase acoustique. Cependant, ces techniques sont complexes à mettre en oeuvre. C'est pourquoi, dans l'invention, ledit moyen d'atténuation d'ondes de pression résonantes dans la cavité cathodique comprend au moins un résonateur acoustique débouchant dans la cavité cathodique.

Un résonateur acoustique permet l'atténuation d'un ensemble de modes d'oscillation ; si plusieurs de ces ensembles de modes contribuent de manière significative à l'instabilité de l'arc électrique, il est possible de prévoir une pluralité de dits résonateurs acoustiques accordés ou accordables à des fréquences de résonance différentes.

Ledit ou chaque résonateur acoustique peut être constitué par une cavité secondaire, reliée à la cavité cathodique par l'intermédiaire d'un col. Les expériences réalisées par les inventeurs ont montré qu'au moins dans certains cas la cavité secondaire peut présenter une profondeur très réduite, de l'ordre de 1,5 mm. Dans un tel cas, ladite cavité secondaire peut être formée par un évidement ou perçage dans une paroi dudit corps de torche. Ainsi, une torche selon l'invention peut être réalisée à partir d'une torche existante, par exemple disponible dans le commerce, simplement en réalisant un tel évidement ou perçage.

Avantageusement, ledit ou chaque résonateur acoustique peut comprendre un moyen d'accord de sa fréquence de résonance. En effet, la fréquence de résonance optimale (permettant la meilleure stabilisation de l'arc électrique) ne dépend pas seulement de la géométrie de la torche, mais aussi de la composition chimique du gaz plasmagène froid et des conditions opératoires (pression et débit du gaz, courant électrique...). Lorsque la cavité secondaire du résonateur acoustique est formée par un évidement ou perçage dans une paroi du corps de torche, ledit moyen d'accord peut comprendre une simple vis de réglage, prévue à l'intérieur de ladite cavité secondaire.

L'accord en fréquence peut être réalisé manuellement ou de manière automatique. Dans ce deuxième cas, la torche peut comporter un moyen de commande dudit ou de chaque moyen d'accord en fonction d'une mesure de la tension entre l'anode et la cathode.

Avantageusement la cathode de la torche peut être une cathode chaude de forme allongée, s'étendant sur une partie de la longueur du corps de torche ; l'anode peut entourer au moins en partie ladite cathode ; et la cavité cathodique peut être délimitée par la cathode et par la surface intérieure du corps de torche.

Un autre objet de l'invention est un procédé de stabilisation d'une torche à plasma de type à arc soufflé comportant :

- un corps de torche de forme tubulaire ;
- au moins une cathode disposée à l'intérieur dudit corps de torche et délimitant une cavité dite cathodique ; et
- au moins une anode tubulaire, également disposée à l'intérieur du corps de torche, formant tuyère d'éjection du plasma ;

par couplage acoustique de ladite ou de chaque cavité cathodique avec un moyen d'atténuation d'ondes de pression résonantes d'un gaz plasmoagène froid dans la cavité cathodique, ledit moyen comprenant au moins un résonateur acoustique débouchant dans ladite cavité cathodique.

Selon différents modes de réalisation de l'invention, un tel procédé peut comporter également une étape d'accord de la fréquence de résonance dudit ou de chaque résonateur acoustique de manière :

- soit à minimiser l'amplitude des oscillations de la tension entre l'anode et la cathode ;
- soit à maximiser la tension entre l'anode et la cathode ;

lorsqu'un arc électrique est établi entre elles.

Avantageusement ladite ou chaque cathode de la torche à stabiliser peut être une cathode chaude de forme allongée, s'étendant sur une partie de la longueur du corps de torche ; ladite ou chaque anode peut entourer au moins en partie ladite ou une dite cathode ; et ladite ou chaque cavité cathodique peut être délimitée par ladite ou une cathode et par la surface intérieure du corps de torche.

Encore un autre objet de l'invention est l'utilisation d'une torche telle que décrite plus haut pour le dépôt de revêtements de surface.

D'autres caractéristiques, détails et avantages de l'invention ressortiront à la lecture de la description faite en référence aux dessins annexés donnés à titre d'exemple et qui représentent, respectivement :

- La figure 1, une vue en coupe simplifiée d'une torche plasma à arc soufflé selon un premier mode de réalisation de l'invention, dans lequel l'accord en fréquence du résonateur acoustique est obtenu à l'aide d'un piston ;
- La figure 2, un graphique du signal de tension entre l'anode et la cathode d'une torche plasma à arc soufflé conventionnelle ;
- La figure 3, un graphique du signal de tension entre l'anode et la cathode de la torche de la figure 1, pour deux valeurs de la position « z » du piston ;
- La figure 4, un graphique de la tension d'arc moyenne dans la torche de la figure 1, en fonction de la position « z » du piston ;
- La figure 5, un graphique du coefficient de stabilité de la torche de la figure 1, en fonction de la position « z » du piston ;
- La figure 6, un graphique montrant l'évolution du spectre de puissance de la tension d'arc dans la torche de la figure 1, en fonction de la position « z » du piston ; et
- La figure 7, une vue de détail d'une torche selon un deuxième mode de réalisation de l'invention.

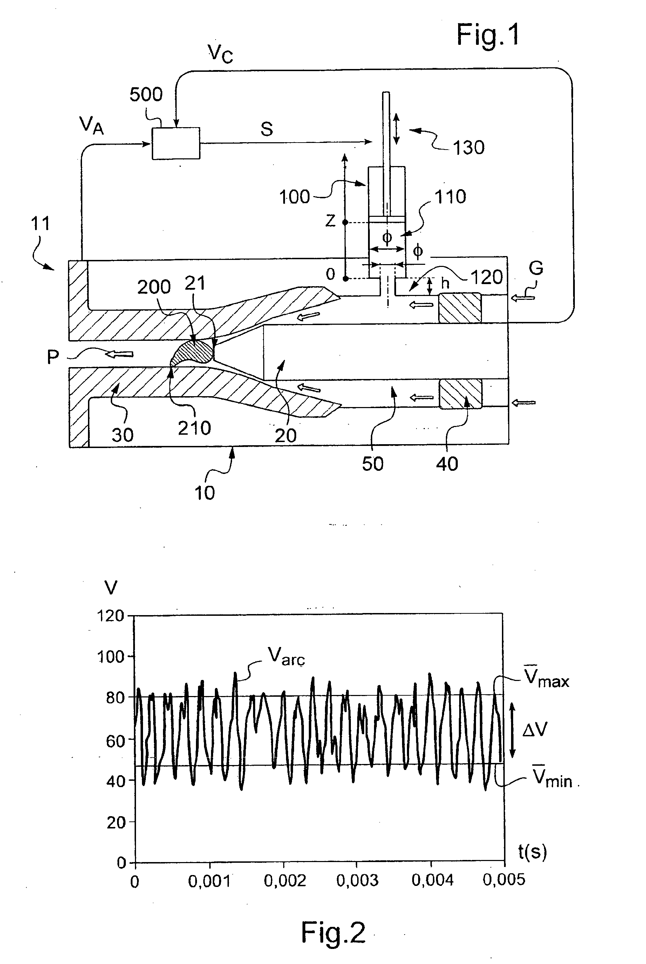

La figure 1 montre une vue en coupe simplifiée d'une torche plasma à arc soufflé du type avec cathode chaude à tige, comportant :

- un corps de torche 10, de forme tubulaire, réalisé au moins en partie en matériau électriquement isolant ; l'intérieur du corps de torche présente une forme cylindrique dans sa partie amont (par où le gaz plasmagène G est injecté), puis, dans sa partie aval, une forme de tuyère avec une sortie 11 ;
- une cathode 20, de forme allongée, s'étendant à l'intérieur du corps de torche sur une partie de sa longueur, et présentant une pointe conique 21 à son extrémité ;
- une anode 30, également de forme tubulaire, entourant partiellement la cathode 20 et s'étendant au-delà de la pointe 21 de cette dernière, en direction de la sortie 11 et formant ainsi une tuyère d'éjection du plasma. L'anode et la cathode sont isolées électriquement entre elles.

La région comprise entre la cathode 20 et la paroi interne du corps de torche 10 forme une « cavité cathodique » annulaire. Cette cavité est délimitée axialement :

- vers l'aval, par le rétrécissement du corps de torche qui se produit au niveau de la pointe de la cathode ; et
- vers l'amont par l' « anneau d'injection » 40 qui permet l'injection du gaz plasmagène froid G dans la cavité cathodique.

La référence 200 indique l'arc électrique qui se développe entre la pointe 21 de la cathode et l'anode 30 ; la référence 210 indique le « pied » de l'arc, c'est à dire le point de contact entre l'arc et l'anode. Ce sont les déplacements de ce « pied », ainsi que ses décrochages et raccrochages à la surface anodique qui sont à l'origine des instabilités que la présente invention vise à éviter.

En aval de l'arc 200, l'écoulement de gaz plasmagène G se transforme en jet de plasma P.

Un résonateur acoustique 100, de forme cylindrique, est couplé à la cavité cathodique 50. Ce résonateur comporte une chambre, ou cavité secondaire, 110, de diamètre $\phi_1$ et hauteur z, et un col 120 de diamètre $\phi_2 \leq \phi_1$ et hauteur h. La hauteur z de la chambre 110, et donc la fréquence de résonance du résonateur, peuvent être réglées en déplaçant un piston 130, par exemple à l'aide d'un moteur électrique, d'un actionneur piézoélectrique ou simplement d'un réglage manuel.

Dans un exemple de réalisation de l'invention :

- la cavité cathodique présente une forme globalement en anneau, de longueur 16mm, diamètre extérieur (maximal) 21 mm et diamètre intérieur (maximal) 14mm ;
- h=6mm ;
- $\phi_1$=10 mm ;
- $\phi_2$=5 mm ;
- z= 0 - 120 mm.

Le diamètre de l'anode (en aval de la pointe 21) est de 6 mm. La torche est alimentée par un mélange argon-hydrogène, avec des débits respectifs de 45 et 10 splm (« standard liters per minute », c'est à dire litres standard - à 20°C, 1 atmosphère - par minute). Le courant d'arc est de 500 A.

La figure 2 montre un graphique en fonction du temps t (en secondes) de la tension d'arc $V_{arc}$, c'est à dire de la tension mesurée entre l'anode et la cathode, pour une torche semblable à celle de la figure 1, mais ne comportant pas de résonateur acoustique. On peut observer que la tension fluctue entre 40 et 90 V environ, avec une valeur moyenne $\overline{V}$ de l'ordre de 60 V. Sur la figure, $\overline{V}_{max}$ représente la moyenne des maxima de tension au-dessus de la valeur moyenne V et $\overline{V}_{min}$ la moyenne des minima de tension au-dessous de ladite valeur moyenne $\overline{V}$.

L'algorithme de détection des maxima (ou des minima) consiste à ajuster successivement sur 3 points du signal mesuré une parabole, chercher si cette dernière se trouve sur un maximum local (ou un minimum local) et déterminer le signe du coefficient quadratique pour obtenir la concavité (maximum ou minimum).

L'amplitude moyenne de tension, ΔV, est définie par :

$$\Delta V = \overline{V}_{max} - \overline{V}_{min}$$

On définit également le coefficient de stabilité $A_V$ :

$$A_V = \frac{\Delta V}{\overline{V}}$$

Si le coefficient $A_V$ diminue, la stabilité de la torche augmente.

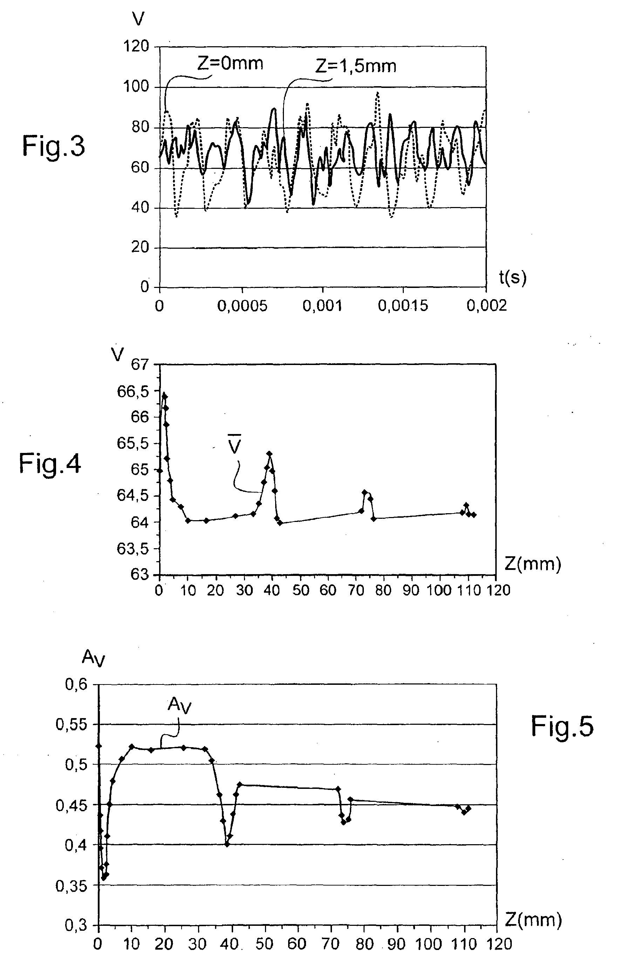

La figure 3 montre, à une échelle temporelle agrandie par rapport à celle de la figure 2, les signaux de tension de la torche de la figure 1 pour deux valeurs de z, (hauteur de la chambre du résonateur) : z=0, ce qui correspond à un résonateur inactif, et z=1,5 mm. On peut observer que les oscillations du signal de tension sont moins importantes pour z=1,5 mm, ce qui montre déjà que la présence du résonateur a un effet positif sur la stabilité de la torche.

La figure 4 montre un graphique de la tension d'arc moyenne $\overline{V}$ pour différentes positions z du résonateur. On observe que la tension moyenne varie en fonction de z et possède plusieurs maxima pour z = 1,5 ; 38,4 ; 73,4 ; 108,4 mm, le maximum le plus important correspondant à z=1,5 mm.

La présence du résonateur acoustique modifie donc la tension moyenne de la torche.

La figure 5 montre un graphique du coefficient de stabilité $A_V$ en fonction de z pour les mêmes conditions expérimentales que la figure 5. On observe plusieurs minima, qui coïncident avec les maxima de tension, le minimum le plus important (correspondant aux conditions de plus grande stabilité) étant obtenu pour z=1,5 mm.

La condition z=1,5 mm correspond au premier mode d'oscillation du résonateur, qui peut donc être modélisé par un résonateur de Helmholtz.

Le coefficient de stabilité varie de 0,52 quand le résonateur n'est pas actif (z=0) à 0,36 pour z=1.5 mm soit une diminution de 30 %. La stabilité de la torche est donc améliorée d'environ 30 %.

La corrélation observée entre les graphiques de V et de $A_V$ montre que, pour stabiliser la torche de manière optimale, il est possible d'accorder le résonateur 100 soit directement en minimisant $A_V$ soit, ce qui est plus simple, en maximisant $\overline{V}$. Le réglage de la position optimale de z (qui peut varier dans le temps, si les conditions opérationnelles changent) peut se faire manuellement ou de manière automatique, par des techniques classiques. A titre d'exemple, la figure 1 représente de manière schématique un moyen de commande 500 (par exemple un ordinateur programmé de manière opportune, ou une carte électronique dédiée) recevant en entrée des signaux VA, $V_c$ indicatifs des niveaux de tension de l'anode et de la cathode, respectivement, et générant un signal « s » de pilotage du piston 130.

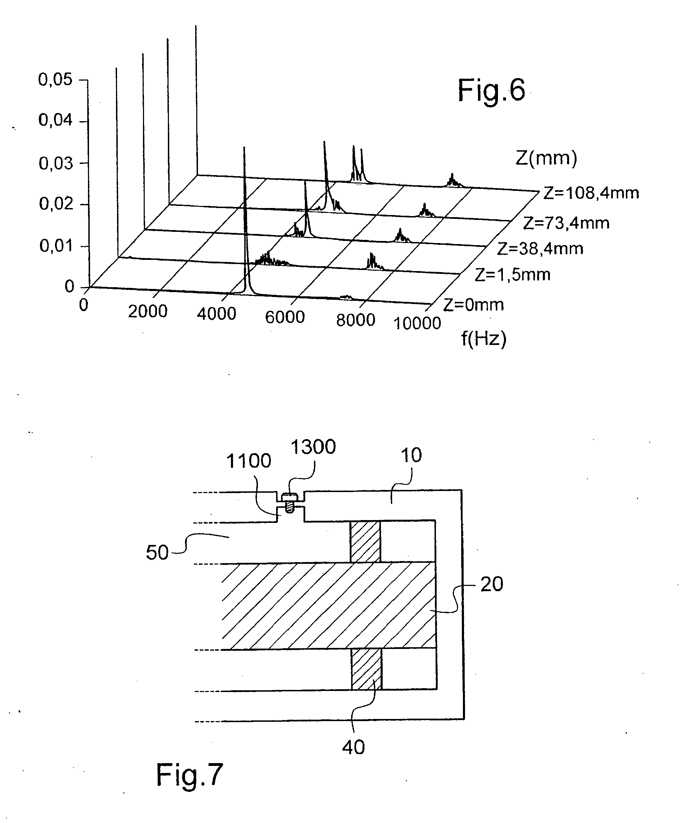

La figure 6 montre les spectres de puissance normalisés pour les positions z=0 ; 1,5 ; 38,4 ; 73,4 ; 108.4 mm. Le spectre de puissance pour z = 0 montre un pic principal à 4550 Hz environ qui traduit le phénomène de résonance mécanique entre l'arc électrique et le gaz plasmagène froid dans la cavité cathodique.

Quand z = 1,5 mm, l'amplitude du pic principal de résonance à 4550 Hz diminue fortement. Une réduction est observée aussi pour z=38,4 ; 73,4 ; 108.4 mm, mais elle est moins marquée. Le phénomène de résonance est par conséquent fortement inhibé par l'action du résonateur acoustique, et la stabilité de la torche est améliorée.

Le fait que la meilleure stabilisation de la torche soit obtenue au niveau de la première résonance (z=1,5 mm) permet de simplifier la réalisation d'une torche à plasma selon l'invention. En effet, comme le montre la figure 7, la cavité du résonateur acoustique peut être réalisée très simplement sous la forme d'un évidement ou perçage 1100 dans la paroi interne du corps de torche 10. L'accord en fréquence peut être assuré par une simple vis de réglage 1300.

L'invention a été décrite en référence au cas particulier des torches à cathode chaude de type tige. Il ne s'agit pas là d'une limitation fondamentale : en effet, toutes les torches de type à arc soufflé présentent au moins une cavité cathodique qui est le siège d'ondes stationnaires de pression. Comme dans le cas des torches à cathode chaude de type tige, ces ondes de pression contribuent à l'instabilité du courant d'arc, et peuvent être atténuées au moyen d'un résonateur acoustique couplé avec la cavité cathodique.

Dans les torches comportant une pluralité de cathodes et/ou d'anodes, et donc une pluralité de cavité cathodiques, un résonateur acoustique sera avantageusement prévu dans chaque cavité.

## Revendications

1. Torche à plasma du type à arc soufflé comportant :

   - un corps de torche (10) de forme tubulaire ;
   - au moins une cathode (20) disposée à l'intérieur dudit corps de torche et délimitant au moins une cavité dite cathodique (50) ; et
   - au moins une anode tubulaire (30), également disposée à l'intérieur du corps de torche, formant tuyère d'éjection du plasma ;

   la dite torche comporte également un moyen (100) d'atténuation d'ondes de pression résonantes d'un gaz plasmagène froid dans ladite ou chaque cavité cathodique, **caractérisée en ce que** le dit moyen comprend au moins un résonateur acoustique (100) débouchant dans la cavité cathodique (50).

2. Torche à plasma selon la revendication 1, comportant une pluralité de dits résonateurs acoustiques accordés ou accordables à des fréquences de résonance différentes.

3. Torche à plasma selon l'une des revendications 1 ou 2, dans laquelle ledit ou chaque résonateur acoustique est constitué par une cavité secondaire (110), reliée à la cavité cathodique par l'intermédiaire d'un col (120).

4. Torche à plasma selon la revendication 3, dans laquelle ladite cavité secondaire est formée par un évidement ou perçage (1100) dans une paroi dudit corps de torche.

5. Torche à plasma selon l'une des revendications précédentes, dans laquelle ledit ou chaque résonateur acoustique comprend un moyen (130, 1300) d'accord de sa fréquence de résonance.

6. Torche à plasma selon les revendications 4 et 5, dans laquelle ledit moyen d'accord comprend une vis de réglage (1300) prévue à l'intérieur de ladite cavité secondaire (1100).

7. Torche à plasma selon l'une des revendications 5 ou 6, comportant un moyen de commande (500) dudit ou de chaque moyen d'accord en fonction d'une mesure de la tension entre l'anode et la cathode.

8. Torche à plasma selon l'une des revendications précédentes dans laquelle :

   - ladite ou chaque cathode (20) est une cathode chaude de forme allongée, s'étendant sur une partie de la longueur du corps de torche ;
   - ladite ou chaque anode (30) entoure au moins en partie ladite ou une dite cathode ; et
   - ladite ou chaque cavité cathodique est délimitée par ladite ou une cathode et par la surface intérieure du corps de torche.

9. Procédé de stabilisation d'une torche à plasma de type à arc soufflé comportant :

   - un corps de torche (10) de forme tubulaire ;
   - au moins une cathode (20) disposée à l'intérieur dudit corps de torche et délimitant une cavité dite cathodique (50) ; et
   - au moins une anode tubulaire (30), également disposée à l'intérieur du corps de torche, formant tuyère d'éjection du plasma ;

par couplage acoustique de ladite ou de chaque cavité cathodique avec un moyen d'atténuation d'ondes de pression résonantes d'un gaz plasmagène froid dans la cavité cathodique, ledit moyen comprenant au moins un résonateur acoustique débouchant dans ladite cavité cathodique.

10. Procédé selon la revendication 9, comportant également une étape d'accord de la fréquence de résonance dudit ou de chaque résonateur acoustique de manière à minimiser l'amplitude des oscillations de la tension entre l'anode et la cathode, lorsqu'un arc électrique est établi entre elles.

11. Procédé selon la revendication 9, comportant également une étape d'accord de la fréquence de résonance dudit ou de chaque résonateur acoustique de manière à maximiser la tension entre l'anode et la cathode, lorsqu'un arc électrique est établi entre elles.

12. Procédé selon l'une des revendications 9 à 11 dans lequel

- ladite ou chaque cathode (20) de la torche est une cathode chaude de forme allongée, s'étendant sur une partie de la longueur du corps de torche ;
- ladite ou chaque anode (30) entoure au moins en partie ladite ou une cathode ; et
- ladite ou chaque cavité cathodique est délimitée par ladite ou une cathode et par la surface intérieure du corps de torche.

13. Utilisation d'une torche selon l'une des revendications 1 à 8 pour le dépôt de revêtements de surface.

**Patentansprüche**

1. Plasmaspritzbrenner des Typs mit einem elektrischen Lichtbogen, der

- einen rohrförmigen Brennerkörper (10);
- mindestens eine Kathode (20), die innerhalb des Brennerkörpers angeordnet ist und mindestens einen sogenannten kathodischen Hohlraum (50); und
- eine rohrförmige Anode (30) aufweist, die ebenfalls innerhalb des Brennerkörpers angeordnet ist und eine Düse zum Ausstoßen des Plasmas bildet,

wobei der Brenner ferner eine Einrichtung (100) zum Abschwächen der Resonanz-Druckwellen eines kalten Plasmagases in dem oder jedem kathodischen Hohlraum aufweist, **dadurch gekennzeichnet, dass** die Einrichtung mindestens einen akustischen Resonator (100) aufweist, der in den kathodischen Hohlraum (50) mündet.

2. Plasmaspritzbrenner nach Anspruch 1, der eine Vielzahl von akustischen Resonatoren aufweist, die auf verschiedene Resonanzfrequenzen abgestimmt oder abstimmbar sind.

3. Plasmaspritzbrenner nach einem der Ansprüche 1 oder 2, in welchem der oder jeder akustische Resonator aus einem Nebenhohlraum (110) besteht, der mit dem kathodischen Hohlraum über einen Hals (120) verbunden ist.

4. Plasmaspritzbrenner nach Anspruch 3, in welchem der Nebenhohlraum (110) aus einer Aussparung oder einer Bohrung (1100) in einer Wand des Brennerkörpers gebildet ist.

5. Plasmaspritzbrenner nach einem der vorhergehenden Ansprüche, in welchem der oder jeder akustische Resonator eine Einrichtung (130, 1300) zum Abstimmen seiner Resonanzfrequenz aufweist.

6. Plasmaspritzbrenner nach den Ansprüche 4 und 5, in welchem die Abstimmeinrichtung eine Einstellschraube (1300) aufweist, die innerhalb des Nebenhohlraums (1100) vorgesehen ist.

7. Plasmaspritzbrenner nach einem der Ansprüche 5 oder 6, der eine Einrichtung zum Steuern (500) der oder jeder Abstimmeinrichtung in Abhängigkeit von der Spannung zwischen der Anode und der Kathode aufweist.

8. Plasmaspritzbrenner nach einem der vorhergehenden Ansprüche, in welchem:

- die oder jede Kathode (20) eine Glühkathode mit länglicher Form ist, die sich über einen Teil der Länge des Brennerkörpers erstreckt;
- die oder jede Anode (30) mindestens teilweise die oder eine Kathode umgibt; und
- der oder jeder kathodische Hohlraum durch die oder eine Kathode und durch die Innenseite des Brennerkörpers begrenzt ist.

9. Verfahren zur Stabilisierung eines Plasmaspritzbrenners des Typs mit einem elektrischen Lichtbogen, der

- einen rohrförmigen Brennerkörper (10);
- mindestens eine Kathode (20), die innerhalb des Brennerkörpers angeordnet ist und einen sogenannten kathodischen Hohlraum (50) begrenzt; und
- mindestens eine rohrförmige Anode (30) aufweist, die ebenfalls innerhalb des Brennerkörpers angeordnet ist und eine Düse zum Ausstoßen des Plasmas bildet,

durch akustische Kupplung des oder jedes kathodischen Hohlraums mit einer Einrichtung zum Abschwächen der Resonanz-Druckwellen eines kalten Plasmagases in dem kathodischen Hohlraum, wobei die Einrichtung mindestens einen akustischen Resonator aufweist, der in den kathodischen Hohlraum mündet.

**10.** Verfahren nach Anspruch 9, das ferner einen Schritt des Abstimmens der Resonanzfrequenz des oder jedes akustischen Resonators umfasst, so dass die Amplitude der Schwingungen der Spannung zwischen der Anode und der Kathode minimiert wird, wenn ein Lichtbogen zwischen ihnen aufgebaut ist.

**11.** Verfahren nach Anspruch 9, das ferner einen Schritt des Abstimmens der Resonanzfrequenz des oder jedes akustischen Resonators umfasst, so dass die Amplitude der Schwingungen der Spannung zwischen der Anode und der Kathode maximiert wird, wenn ein Lichtbogen zwischen ihnen aufgebaut ist.

**12.** Verfahren nach einem der Ansprüche 9 bis 11, in welchem

- die oder jede Kathode (20) des Brenners eine Glühkathode mit länglicher Form ist, die sich über einen Teil der Länge des Brennerkörpers erstreckt;
- die oder jede Anode (30) mindestens teilweise die oder eine Kathode umgibt; und
- der oder jeder kathodische Hohlraum durch die oder eine Kathode und durch die Innenseite des Brennerkörpers begrenzt ist.

**13.** Verwendung eines Plasmaspritzbrenners nach einem der Ansprüche 1 bis 8 zum Anbringen einer Oberflächenbeschichtung.

## Claims

**1.** A blown-arc plasma torch comprising:

- a tubular torch body (10);
- at least one cathode (20) located inside said torch body and bounding at least one cavity called the cathode cavity (50); and
- at least one tubular anode (30), also located inside the torch body, forming a tube for ejecting the plasma,

wherein the plasma torch also comprises a means (100) for attenuating resonant pressure waves in said or each cathode cavity, **characterized in that** the said means comprises at least one acoustic resonator (100) opening onto the cathode cavity (50).

**2.** The plasma torch as claimed in claim 1, comprising a plurality of said acoustic resonators tuned or tunable to different resonant frequencies.

**3.** The plasma torch as claimed in either of claims 1 and 2, in which said or each acoustic resonator consists of a secondary cavity (110) connected to the cathode cavity via a neck (120).

**4.** The plasma torch as claimed in claim 3, in which said secondary cavity is formed by a void or hole (1100) in a wall of said torch body.

**5.** The plasma torch as claimed in one of the preceding claims, in which said or each acoustic resonator comprises a means (130, 1300) for tuning its resonant frequency.

**6.** The plasma torch as claimed in claims 4 and 5, in which said tuning means comprises an adjustment screw (1300) provided inside said secondary cavity (1100).

**7.** The plasma torch as claimed in either of claims 5 and 6, comprising a means (500) for controlling said or each tuning means depending on the voltage measured between the anode and the cathode.

**8.** The plasma torch as claimed in one of the preceding claims, in which:

- said or each cathode (20) is an elongate hot cathode extending over part of the length of the torch body;
- said or each anode (30) at least partially surrounds said cathode or a said cathode; and
- said or each cathode cavity is bounded by said or a cathode and by the interior surface of the torch body.

**9.** A method for stabilizing a blown-arc plasma torch comprising:

- a tubular torch body (10);
- at least one cathode (20) located inside said torch body and bounding a cavity called the cathode cavity (50); and
- at least one tubular anode (30), also located inside the torch body, forming a tube for ejecting the plasma,

by acoustically coupling said or each cathode cavity with a means for attenuating resonant pressure waves in the cathode cavity, comprising at least one acoustic resonator.

10. The method as claimed in claim 9, also comprising a step of tuning the resonant frequency of said or each acoustic resonator so as to minimize the amplitude of oscillations in the voltage between the anode and the cathode when an electric arc is established between them.

11. The method as claimed in claim 9, also comprising a step of tuning the resonant frequency of said or each acoustic resonator so as to maximize the voltage between the anode and the cathode when an electric arc is established between them.

12. The method as claimed in one of claims 9 to 11, in which:

- said or each cathode (20) of the torch is an elongate hot cathode extending over part of the length of the torch body;
- said or each anode (30) at least partially surrounds said cathode or a cathode; and
- said or each cathode cavity is bounded by said or a cathode and by the interior surface of the torch body.

13. The use of a torch as claimed in one of claims 1 to 8 to deposit surface coatings.

EP 2 502 468 B1

# Fig.1

# Fig.2

Fig.3

Fig.4

Fig.5

Fig.6

Z(mm)

Z=108,4mm

Z=73,4mm

Z=38,4mm

Z=1,5mm

Z=0mm

f(Hz)

Fig.7

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5406046 A
- EP 0277845 A
- US 7030336 B
- US 5220150 A

**Littérature non-brevet citée dans la description**

- **M. VILOTIJEVIC et al.** Velocity and texture of a plasma jet created in a plasma torch with fixed minimal arc length. *Plasma Sources Sci. Technol.,* 2009, vol. 18, 015016
- **S. A. WUTZKE et al.** Study of electric-arc behavior with superimposed flow. *AIAA J.,* 1967, vol. 5, 707
- **J. P. TRELLES et al.** Non-equilibrium modeling of arc plasma torches. *J. Phys. D : Appl. Phys.,* 2007, vol. 40, 5937-5952
- **J. F. COUDERT ; V. RAT ; D. RIGOT.** Influence of Helmholtz oscillations on arc fluctuations in a dc plasma spraying torch. *J. Phys. D : Appl. Phys.,* 2007, vol. 40, 7357-7366
- **J. F. COUDERT ; V. RAT.** Influence of configuration and operating conditions on the electric arc instabilities of a plasma spray torch: role of acoustic resonance. *J. Phys. D: Appl. Phys.,* 2008, vol. 41, 205208
- **V. RAT ; D.F. COUDERT.** Acoustic signature analysis of the interaction between a dc plasma jet and a suspension liquid jet. *J. Phys. D: App. Phys.,* 2009, vol. 42, 195202